# EUROPÄISCHE PATENTSCHRIFT

(11) **EP 2 641 682 B1**
(45) Veröffentlichungstag und Bekanntmachung des Hinweises auf die Patenterteilung: **29.07.2015**
(21) Anmeldenummer: 12196649.3
(22) Anmeldetag: 12.12.2012
(51) Int. Cl.: B23D 15/02, B23D 35/00

(54) **Verfahren zum Schneiden von Blech- oder Blockmaterial**
Method for cutting plate or block material
Procédé de coupe de matériaux en bloc ou en tôle

(30) Priorität: 23.12.2011 DE 102011089818
(43) Veröffentlichungstag der Anmeldung: 25.09.2013
(73) Patentinhaber: Achenbach Buschhütten GmbH & Co. KG, 57223 Kreuztal (DE)
(72) Erfinder: Barten, Axel, 57078 Siegen (DE); Schlag, Harald, 57223 Kreuztal (DE)
(74) Vertreter: advotec.

(56) Entgegenhaltungen:
- DE-A1- 3 303 540
- FR-A- 1 425 147

## Beschreibung

Die vorliegende Erfindung betrifft ein Verfahren zum Schneiden von Blech- oder Blockmaterial mittels einer Schneidvorrichtung gemäß dem Oberbegriff des Anspruchs 1.

Ein Verfahren der eingangs genannten Art ist aus der DE 33 03 540 A1 bekannt. Derartige Verfahren werden zum Beschneiden der Enden des gewalzten Materials in Walzanlagen eingesetzt. Dieses Beschneiden, das häufig auch als "Schopfen" bezeichnet wird, ist notwendig, um aufgeworfene, unebene Endstücke von dem Walzmaterial abzutrennen, da diese Endstücke ansonsten die weitere Verarbeitung des gewalzten Materials behindern würden. Die dabei verwendeten Schneidvorrichtungen werden häufig auch als "Blockscheren" oder "Schopfscheren" bezeichnet und werden eingesetzt, um Teilstücke aus gewalztem Material abzulängen, insbesondere um Plattenmaterial maßhaltig herzustellen.

Besonders bei der Herstellung von Plattenmaterial wird Wert darauf gelegt, dass die Schnittkanten keinen von der Oberfläche des Plattenmaterials abstehenden Schnittgrat aufweisen, der bei der weiteren Verarbeitung der Platten hinderlich ist. Insbesondere dann, wenn abgelängte Platten in einem weiteren Bearbeitungsschritt einem Reckvorgang unterzogen werden, um durch eine dabei erfolgende Kaltverfestigung ihre Festigkeitseigenschaften zu verbessern, erweist sich ein an der Schnittkante infolge des Schneidvorgangs ausgebildeter Grat als störend bei der Einspannung der Plattenenden in eine Reckvorrichtung.

Neben der Vermeidung eines Grates an den Schnittkanten ist es auch erwünscht, dass die Enden der Platten keine Verwerfungen aufweisen, die die gewünschte Planheit der Platten nachteilig beeinträchtigen.

Der vorliegenden Erfindung liegt daher die Aufgabe zugrunde, ein Verfahren zum Schneiden von Blech- oder Blockmaterial vorzuschlagen, das die Ausbildung eines Oberflächengrates oder von Verwerfungen im Bereich der Schnittkanten vermeidet.

Diese Aufgabe wird durch ein Verfahren mit den Merkmalen des Anspruchs 1 gelöst.

Bei dem erfindungsgemäßen Verfahren zum Schneiden von Blech- oder Blockmaterial mittels der vorstehend erläuterten Schneidvorrichtung werden sowohl das Untermesser als auch das Obermesser zur Ausführung des Schneidvorgangs mit einem zwischen der Untermesserschneidkante bzw. der Obermesserschneidkante und der Materialebene ausgebildeten Untermesserschneidkantenwinkel bzw. Obermesserschneidkantenwinkel im Gestell verschwenkt und nachfolgend zur Ausführung des Schneidvorgangs translatorisch gegen die Materialebene verfahren, derart, dass zuerst die Translationsbewegung des Untermessers und erst nachfolgend die Translationsbewegung des Obermessers erfolgt.

Einerseits können die zur Ausführung des Schneidvorgangs erforderlichen Druckkräfte sowohl von oben als auch von unten auf das Material aufgebracht werden, so dass bereits aufgrund dieser beidseitigen Beaufschlagung des Materials mit Druckkräften extreme Verwerfungen vermieden werden können. Darüber hinaus ermöglicht die Einstellung eines definierten Untermesserschneidkantenwinkels sowie eines definierten Obermesserschneidkantenwinkels eine erhebliche Reduzierung der zur Ausführung des Schneidvorgangs auf das Material aufzubringenden Druckkräfte, so dass auch hierdurch die Ausbildung von Verwerfungen entsprechend weiter reduziert werden kann.

Aufgrund des voneinander unabhängigen Verfahrens des Untermessers und des Obermessers kann der Schneidvorgang in mehrere Phasen aufgelöst werden, derart, dass das Untermesser in einer ersten Phase bis zu einer definierten Schnitttiefe gegen das zu schneidende Material verfahren wird und die vollständige Durchtrennung des Materials in einer nachfolgenden Phase durch das Obermesser erfolgt. Hierin liegt der besondere Vorteil, dass während der Ausführung des ersten Teilschnitts durch das Untermesser, der nach oben gerichtet ist, keine Beanspruchung einer beispielsweise als Rollenbahn oder dergleichen ausgeführten Transportvorrichtung erfolgt, auf der das zu schneidende Material durch die Blockschere gefördert wird. Vielmehr kann sich während des ersten Teilschnitts das zu schneidende Material mit seiner Oberfläche gegen das Obermesser abstützen. Erst während des zweiten Teilschnitts erfolgt eine nach unten gerichtete Druckbeaufschlagung des Materials, wobei diese dann jedoch im Wesentlichen von dem bereits bis zur definierten Schnitttiefe in das Material eingefahrenen Untermesser aufgenommen wird, so dass tatsächlich im Wesentlichen keine Beaufschlagung der Transportbahn durch Schneidkräfte erfolgt.

Als besonders vorteilhaft erweist es sich, wenn vor Ausführung des Schneidvorgangs zur Positionierung des Obermessers gegenüber der Materialebene das Obermesser gegen die Oberfläche des in der Materialebene angeordneten Materials verfahren wird, anschließend das Untermesser mit definiertem Untermesserschneidkantenwinkel gegen eine Mittelachse eines Materialquerschnitts bis zum Erreichen einer definierten Schnitttiefe verfahren wird und nachfolgend das Obermesser mit definiertem Obermesserschneidkantenwinkel zum Durchtrennen des Materials im Materialquerschnitt verfahren wird.

Wie bereits im Zusammenhang mit der Erläuterung der erfindungsgemäßen Schneidvorrichtung ausführlich erläutert, ermöglicht die Durchführung des erfindungsgemäßen Verfahrens neben einer Ausbildung einer Schnittkante innerhalb des Materialsquerschnitts eine weitestgehende Entlastung einer das Material fördernden Transportbahn.

Besonders bevorzugt ist es, wenn die Einstellung des Untermesserschneidkantenwinkels α_{U} zwischen der Untermesserschneidkante und der Materialebene sowie die Einstellung des Obermesserschneidkantenwinkels α_{O} zwischen der Obermesserschneidkante und der Materialebene derart erfolgt, dass der Untermesserschneidkantenwinkel α_{U} und der Obermesserschneidkantenwinkel α_{O} entsprechend dem gewünschten Schnittkantenwinkel (Soll-Schnittkantenwinkel), unter dem eine im Materialquerschnitt ausgebildete Schnittkante gegenüber der Mittelachse des Materialquerschnitts verläuft, gewählt wird.

Hierdurch ist es möglich, die Schnittkante im Materialquerschnitt so auszubilden, dass sie sowohl mit Abstand zur Oberkante als auch mit Abstand zur Unterkante schräg innerhalb des Materialquerschnitts verläuft.

Als besonders vorteilhaft hinsichtlich einer möglichst gradlinig ausgebildeten Schnittkante hat es sich erwiesen, wenn der Untermesserschneidkantenwinkel und der Obermesserschneidkantenwinkel übereinstimmend eingestellt werden.

Besonders bevorzugt ist es, wenn der Untermesserschneidkantenwinkel und der Obermesserschneidkantenwinkel entsprechend einem Soll-Schnittkantenwinkel im Materialquerschnitt eingestellt werden, der zwischen einer Seitenkanten des Materialquerschnitts in einem Schnittkantenabstand von einer Oberkante und einer Unterkante des Materialquerschnitts miteinander verbindenden Schnittkante und der Mittelachse des Materialquerschnitts ausgebildet ist.

Nachfolgend wird eine bevorzugte Ausführungsform der Schneidvorrichtung anhand der Zeichnung näher erläutert.

Es zeigen:
- **Fig. 1**: eine Schneidvorrichtung mit einer in einem Gestell angeordneten Untermesser-Anordnung und Obermesser-Anordnung;
- **Fig. 2**: die in **Fig. 1** dargestellte Schneidvorrichtung mit angehobener Obermesser-Anordnung;
- **Fig. 3**: die Schneidmesseranordnung während der Durchführung eines Schneidvorgangs;
- **Fig. 4**: eine aus Untermesser und Obermesser gebildeten Messeranordnung zu Beginn des Schneidvorgangs;
- **Fig. 5**: die in **Fig. 4** dargestellte Messeranordnung nach Ausführung eines ersten Teilschnitts durch das Untermesser;
- **Fig. 6**: die in **Fig. 4** dargestellte Messeranordnung vor Durchführung des zweiten Teilschnitts durch das Obermesser;
- **Fig. 7**: die in **Fig. 4** dargestellte Messeranordnung nach Durchführung des zweiten Teilschnitts durch das Obermesser.

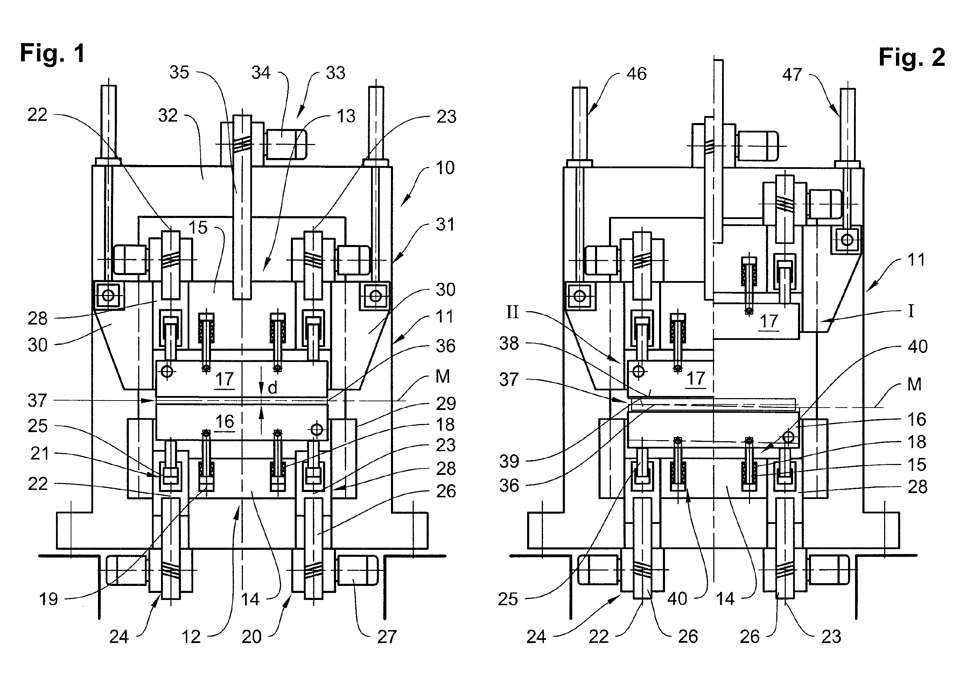

**Fig. 1** zeigt eine Schneidvorrichtung 10 mit einem Gestell 11, in dem sich eine Untermesser-Anordnung 12 und eine Obermesser-Anordnung 13 befindet. Die Untermesser-Anordnung 12 und die Obermesser-Anordnung 13 weisen jeweils einen Messerbalken 14, 15 auf, an denen zum Anschluss eines Untermessers 16 sowie eines Obermessers 17 jeweils zwei in Federpaketen 18 elastisch abgestützte Zuganker 19 angeordnet sind.

Weiterhin sind die Messerbalken 14, 15 mit einer Verstelleinrichtung 20 und einer Druckeinrichtung 21 versehen, die jeweils paarweise zusammengefasst auf einer gemeinsamen Zustellachse 22, 23 eine Verstelleinheit 24 und eine als hydraulischer Druckzylinder ausgeführte Druckeinheit 25 aufweisen.

Im Fall des in **Fig. 1** dargestellten Ausführungsbeispiels umfassen die Verstelleinheiten 24 eine Stellspindel 26, die von einem Elektromotor 27 längs der Zustellachsen 22, 23 in beide Richtungen verfahrbar sind.

Dabei wirken die Stellspindeln 26 mit ihren Enden unmittelbar auf ein im Messerbalken 14, 15 in Richtung der Zustellachsen 22, 23 verschiebbar gelagertes Stellgehäuse 28, in dem die jeweils der Stellspindel 26 zugeordnete Druckeinheit 25 angeordnet ist.

Sowohl der Messerbalken 14 der Untermesser-Anordnung 12 als auch der Messerbalken 15 der Obermesser-Anordnung 13 sind mittels Gleitschuhen 29, 30 längsverschiebbar an vertikalen Gestellsäulen 31 des Gestells 11 angeordnet. Dabei kann eine vertikale Verschiebung des unteren Messerbalkens 14 gegenüber dem Gestell 11 dadurch erfolgen, dass die Stellgehäuse 28 im Messerbalken 14 blockiert werden und eine vertikale Verschiebung des Messerbalkens 14 mittels der Verstelleinheiten 24 der Untermesser-Anordnung 12 erfolgt. Zur vertikalen Verschiebung des Messerbalkens 15 der Obermesser-Anordnung 13 ist eine separate, zwischen einer oberen Traverse 32 des Gestells 11 und dem oberen Messerbalken 15 wirkende Verstelleinheit 33 vorgesehen, die eine von einem Elektromotor 34 angetriebene und mit einem Ende auf den oberen Messerbalken 15 wirkende Stellspindel 35 aufweist.

Zur Einführung einer Materialbahn 36 in einen zwischen dem Untermesser 16 und dem Obermesser 17 ausgebildeten Schneidspalt 37 kann die Obermesser-Anordnung 13 durch Betätigung der Verstelleinheit 33 in eine in **Fig. 2** dargestellte Öffnungsposition I hochgefahren werden, so dass, wie insbesondere aus **Fig. 2** ersichtlich, auch Materialbahnen 36 in den Schneidspalt 37 eingefahren werden können, die eine wesentlich größere Dicke d aufweisen als die in **Fig. 1** beispielhaft dargestellte Materialbahn 36.

Wie ebenfalls aus der schematischen Darstellung in **Fig. 2** ersichtlich, kann aus der Öffnungsposition I die Obermesser-Anordnung 13 in eine Arbeitsposition II verfahren werden, in der das Obermesser 17 der Obermesser-Anordnung 13 gegen eine Oberseite 38 der Materialbahn 36 verfahren ist und sich dann in dieser Arbeitsposition II in Kontakt mit der Oberseite 38 oder in geringem Abstand von der Oberseite 38 befindet und mit seiner Obermesserschneidkante 39 im Wesentlichen parallel zur Oberseite 38 ausgerichtet ist.

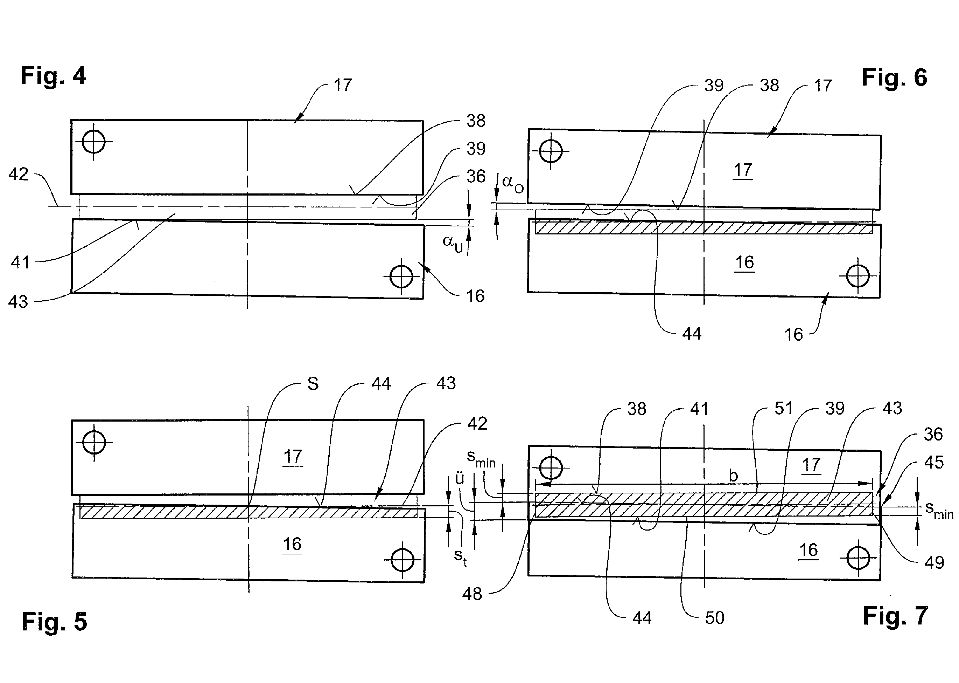

Ausgehend von der in **Fig. 2** dargestellten Arbeitsposition II, in der, wie in **Fig. 4** dargestellt, das Obermesser 17 mit der Obermesserschneidkante 39 vorzugsweise mit leichtem Kontaktdruck gegen die Oberseite 38 der Materialbahn 36 anliegt, und der Messerbalken 15 mittels Blockiereinrichtungen 46, 47 in seiner vertikalen Position blockiert ist, erfolgt vor Durchführung des Schneidvorgangs mittels Verschiebung der Stellgehäuse 28 im unteren Messerbalken 14 ein Verschwenken des Untermessers 16 gegenüber dem im Gestell 11 ebenfalls vorzugsweise hydraulisch blockierten unteren Messerbalken 14. Dabei sind die auf der Zustellachse 22 bzw. 23 angeordneten, hier als Druckzylinder ausgebildeten Druckeinheiten 25 im Wesentlichen drucklos.

Infolge der Verstellung bzw. des Verfahrens der Stellspindeln 26 der Verstelleinheiten 24 werden die Federpakete 18 durch die gelenkig mit dem Untermesser 16 verbundenen Zuganker 19 mehr oder weniger komprimiert, so dass die Zuganker 19 zusammen mit den Federpaketen 18 jeweils als Rückstelleinrichtungen 40 wirken, die ein möglicherweise im Eingriff zwischen den Stellspindeln 26 und dem unteren Messerbalken 14 vorhandenes Spiel kompensieren. Somit ist es möglich, einen in **Fig. 4** dargestellten Untermesserschneidkantenwinkel α_{U} zwischen einer Untermesserschneidkante 44 und einer Unterseite 41 der Materialbahn 36 bzw. einer eine Materialebene M definierende Mittelachse 42 eines Materialquerschnitts 43 der Materialbahn 36 genau einzustellen.

Nachfolgend der in **Fig. 4** dargestellten Positionierung des Obermessers 17 gegen die Oberseite 38 der Materialbahn 36 und der Positionierung des Untermessers 16 mit einem gegenüber der Unterseite 41 der Materialbahn 36 bzw. der Mittelachse 42 eingestellten Untermesserschneidkantenwinkel α_{U} erfolgt in einer ersten Phase des Schneidvorgangs zur Ausführung eines ersten Teilschnitts ein Verfahren des Untermessers 16 gegen das Obermesser 17 bis zu einer Schnitttiefe sₜ, die, wie in **Fig. 5** dargestellt ist, im vorliegenden Fall am Schnittpunkt S der Untermesserschneidkante 44 des Untermessers 16 mit der Mittelachse 42 des Materialquerschnitts 43, die hier definitionsgemäß mit der Materialebene M zusammenfällt, definiert ist. Dieses Verfahren zur Durchführung des ersten Teilschnitts wird durch die auf den Zustellachsen 22, 23 angeordneten Druckeinheiten 25 ausgeführt.

Zur Vorpositionierung des Obermessers 17 zur Durchführung des zweiten Teilschnitts wird, wie in **Fig. 6** dargestellt, das Obermesser 17 mit seiner Obermesserschneidkante 39 mit einem dem Untermesserschneidkantenwinkel α_{U} entsprechenden Oberschneidkantenwinkel α_{O} zur Oberseite 38 der Materialbahn 36 schräg angestellt, so dass die Obermesserschneidkante 39 in etwa parallel zur Untermesserschneidkante 44 ausgerichtet ist.

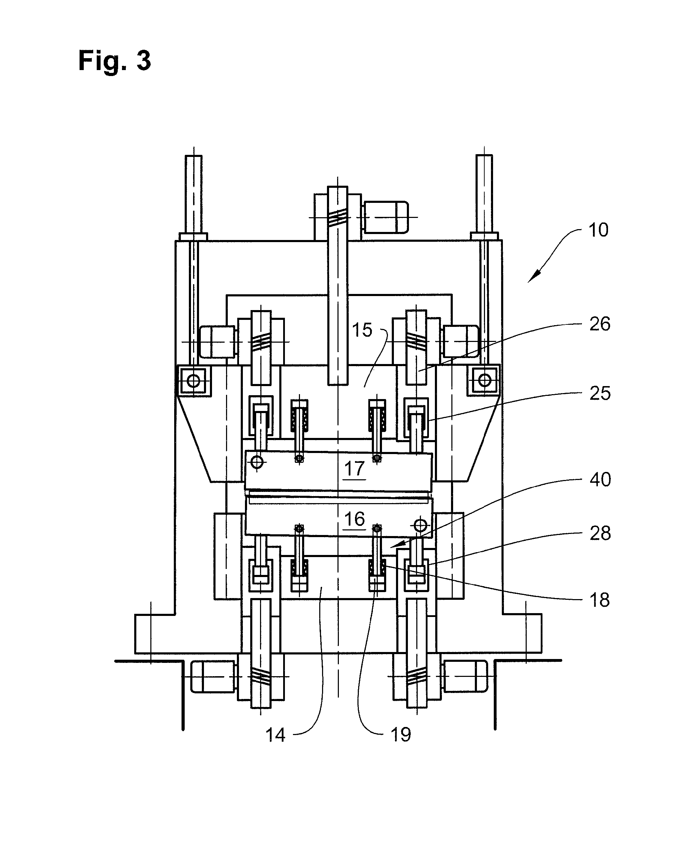

Die in **Fig. 6** dargestellte Relativanordnung zwischen dem Obermesser 17 und dem Untermesser 16 ist auch in **Fig. 3** dargestellt.

Ausgehend von der Vorpositionierung des Obermessers 17 gegenüber der Materialbahn 36 unter dem Obermesserschneidkantenwinkel α_{O} wird anschließend, wie in **Fig. 7** dargestellt, der zweite Teilschnitt durchgeführt, bei dem durch die auf den Zustellachsen 22, 23 **(****Fig. 3****)** angeordneten Druckeinheiten 25 die erforderliche Schneidkraft auf das Obermesser 17 aufgebracht wird. Dabei wird das Obermesser 17 mit seiner Obermesserschneidkante 39 so weit an der Untermesserschneidkante 44 des Untermessers 16 vorbeigeführt, bis sich eine ausreichende Messerüberdeckung ü ergibt, die sicherstellt, dass eine vollständige Durchtrennung der Materialbahn 36 erfolgt, so dass auf dem Materialquerschnitt 43 eine Schnittkante 45 ausgebildet ist, die entsprechend der Schnitttiefe Sₜ von einer Unterkante 50 des Materialquerschnitts 43 beabstandet ist und somit derart im Materialquerschnitt 43 angeordnet ist, dass zwischen einer Oberkante 51 und der Schnittkante 45 sowie zwischen einer Unterkante 50 und der Schnittkante 45 an Seitenkanten 48, 49 des Materialquerschnitts 43 ein ausreichender minimaler Schnittkantenabstand sₘᵢₙ ausgebildet ist, der sicherstellt, dass die Schnittkante 45 weder die Oberseite 38 noch die Unterseite 41 der Materialbahn 36 überragt und somit kein die Oberseite 38 bzw. die Unterseite 41 überragender Schnittgrat ausgebildet sein kann.

Bei dem in den **Fign. 4 bis 7** dargestellten Ausführungsbeispiel des Schneidvorgangs ist der Obermesserschneidkantenwinkel α_{O} bzw. der Untermesserschneidkantenwinkel α_{U} so gewählt, dass sich der Schnittkantenabstand sₘᵢₙ ergibt. Hierzu beträgt der Obermesserschneidkantenwinkel αₒ bzw. der Untermesserschneidkantenwinkel α_{U} etwa 1 Grad. Je schlanker der Materialquerschnitt 43 der Materialbahn 36 ausgebildet ist, also je größer das Verhältnis zwischen der Bahnbreite b und der Bahndicke d ist, desto kleiner wird der Obermesserschneidkantenwinkel α_{O} bzw. der Untermesserschneidkantenwinkel α_{U} gewählt, um das gewünschte Ergebnis zu erreichen, nämlich, dass die Ausbildung eines ausreichenden Schnittkantenabstands von der Oberseite 38 bzw. der Unterseite 41 der Materialbahn 36 ausgebildet ist, um sicherzustellen, dass an der Oberseite bzw. der Unterseite 41 kein Schnittgrat ausgebildet ist.

## Patentansprüche

1. Verfahren zum Schneiden von Blech- oder Blockmaterial mittels einer Schneidvorrichtung (10) zum Schneiden von Blech- oder Blockmaterial mit einem Gestell (11) und einer in dem Gestell angeordneten Messeranordnung mit zumindest einem Untermesser (16) und einem Obermesser (17), wobei das Untermesser und das Obermesser zur Ausführung eines Schneidvorgangs mit ihren Schneidkanten gegeneinander und gegen eine im Gestell definierte Materialebene M zur Anordnung des Blech- oder Blockmaterials verfahrbar sind,
**dadurch gekennzeichnet,**
**dass** sowohl das Untermesser (16) als auch das Obermesser (17) zur Ausführung des Schneidvorgangs mit einem zwischen der Untermesserschneidkante (44) bzw. der Obermesserschneidkante (39) und der Materialebene M ausgebildeten Untermesserschneidkantenwinkel α_{U} bzw. Obermesserschneidkantenwinkel α_{O} im Gestell (11) verschwenkt und nachfolgend translatorisch gegen die Materialebene verfahren werden, derart, dass zuerst die Translationsbewegung des Untermessers und erst nachfolgend die Translationsbewegung des Obermessers erfolgt.

2. Verfahren nach Anspruch 1,
**dadurch gekennzeichnet,**
**dass** vor Ausführung des Schneidvorgangs zur Vorpositionierung des Obermessers (17) das Obermesser gegen eine Oberseite (38) des in der Materialebene M angeordneten Materials verfahren wird, anschließend das Untermesser (16) mit definiertem Untermesserschneidkantenwinkel α_{U} gegen eine Mittelachse (42) eines Materialquerschnitts (43) bis zum Erreichen einer definierten Schnitttiefe sₜ verfahren wird und nachfolgend das Obermesser mit definiertem Obermesserschneidkantenwinkel α_{O} zum Durchtrennen des Materials im Materialquerschnitt verfahren wird.

3. Verfahren nach Anspruch 1 oder 2,
**dadurch gekennzeichnet,**
**dass** die Einstellung des Untermesserschneidkantenwinkels α_{U} zwischen der Untermesserschneidkante (44) und der Materialebene M sowie die Einstellung des Obermesserschneidkantenwinkels α_{O} zwischen der Obermesserschneidkante (39) und der Materialebene derart erfolgt, dass der Untermesserschneidkantenwinkel α_{U} und der Obermesserschneidkantenwinkel α_{O} entsprechend dem gewünschten Schnittkantenwinkel (Soll-Schnittkantenwinkel), unter dem eine im Materialquerschnitt ausgebildete Schnittkante (45) gegenüber der Mittelachse des Materialquerschnitts verläuft, gewählt wird.

4. Verfahren nach Anspruch 3,
**dadurch gekennzeichnet,**
**dass** der Untermesserschneidkantenwinkel α_{U} und Obermesserschneidkantenwinkel α_{O} übereinstimmend eingestellt werden.

5. Verfahren nach Anspruch 3 oder 4,
**dadurch gekennzeichnet,**
**dass** der Untermesserschneidkantenwinkel α_{U} und der Obermesserschneidkantenwinkel α_{O} entsprechend einem Soll-Schnittkantenwinkel im Materialquerschnitt (43) eingestellt werden, der zwischen einer Seitenkanten (48, 49) des Materialquerschnitts in einem Schnittkantenabstand sₘᵢₙ von einer Oberkante (51) und einer Unterkante (50) des Materialquerschnitts miteinander verbindenden Schnittkante (45) und der Mittelachse (42) des Materialquerschnitts ausgebildet ist.

## Claims

1. A method for cutting sheet metal or block material by means of a cutting device (10) for cutting sheet metal or block material, having a framework (11) and a blade arrangement being disposed in the framework, having at least one lower blade (16) and one upper blade (17), wherein the lower blade and the upper blade, for performing a cutting process, can be advanced against each other with their cutting edges and against a material plane M being defined in the framework for disposing the sheet metal or the block material,
**characterised in that,**
with a lower blade cutting edge angle α_{U} or upper blade cutting edge angle α_{O} being configured between the lower blade cutting edge (44) or upper blade cutting edge (39) and the material plane M, both the lower blade (16) and the upper blade (17), for performing the cutting process, are pivoted in the framework (11) and are subsequently translatorily advanced against the material plane, in such a manner that the translatory movement of the lower blade is the first to take place and that the translatory movement of the upper blade takes place subsequently thereto.

2. The method according to claim 1,
**characterised in that**
prior to performing the cutting process, for prepositioning of the upper blade (17), the upper blade is advanced against an upper side (38) of the material being disposed in the material plane M, **in that** the lower blade (16) is afterwards advanced against a central axis (42) of a material cross-section (43) with a defined lower blade cutting edge angle α_{U}, until reaching a defined cutting depth sₜ, and **in that** the upper blade, with a defined upper blade cutting edge angle α_{O}, is subsequently advanced in the material cross-section for splitting the material.

3. The method according to claim 1 or 2,
**characterised in that**
the lower blade cutting edge angle α_{U} is set between the lower blade cutting edge (44) and the material plane M, and the upper blade cutting edge angle α_{O} is set between the upper blade cutting edge (39) and the material plane in such a manner that the lower blade cutting edge angle α_{U} and the upper blade cutting edge angle α_{O} are selected in line with the desired cutting edge angle (target cutting edge angle), at which a cutting edge (45) being configured in the material cross-section is opposite to the central axis of the material cross-section.

4. The method according to claim 3,
**characterised in that**
the lower blade cutting edge angle α_{U} and the upper blade cutting edge angle α_{O} are set in an analogue fashion.

5. The method according to claim 3 or 4,
**characterised in that**
the lower blade cutting edge angle α_{U} and the upper blade cutting edge angle α_{O} are set in line with a target cutting edge angle in the material cross-section (43), which target angle is configured between a cutting edge (45) and the central axis (42) of the material cross-section, the cutting edge connecting lateral edges (48, 49) of the material cross-section at a cutting edge distance sₘᵢₙ from an upper edge (51) and from a lower edge (50) of the material cross-section.

## Revendications

1. Procédé permettant de couper de la tôle ou du matériau de bloc au moyen d'un dispositif (10) de coupage pour couper de la tôle ou du matériau de bloc, ayant un châssis (11) et un dispositif de lames étant disposé dans le châssis, ayant au moins une lame (16) inférieure et une lame (17) supérieure, dans lequel la lame inférieure et la lame supérieure, pour exécuter un processus de coupe, peuvent être déplacées l'une contre l'autre avec leurs bordures de coupe et contre un plan de matériau M étant défini dans le châssis pour disposer la tôle ou le matériau de bloc,
**caractérisé en ce qu'**
avec un angle α_{U} de bordure de coupe de la lame inférieure ou angle α_{O} de bordure de coupe de la lame supérieure étant constitué entre la bordure (44) de coupe de la lame inférieure ou bordure (39) de coupe de la lame supérieure et le plan de matériau M, tant la lame (16) inférieure que la lame (17) supérieure, pour exécuter le processus de coupe, pivotent dans le châssis (11) et après sont déplacées contre le plan de matériau de façon translationnelle, de telle manière que le mouvement de translation de la lame inférieure commence par se dérouler et que le mouvement de translation de la lame supérieure se déroule après.

2. Procédé selon la revendication 1,
**caractérisé en ce qu'**
avant d'exécuter le processus de coupe, pour un pré-positionnement de la lame (17) supérieure, la lame supérieure est déplacée contre une face (38) supérieure du matériau étant disposé dans le plan de matériau M, **en ce que** la lame (16) inférieure est ensuite déplacée contre un axe (42) central d'une section transversale du matériau (43) avec un angle α_{U} de bordure de coupe de la lame inférieure défini, jusqu'à atteindre une profondeur sₜ de coupe définie, et **en ce que** la lame supérieure, avec un angle α_{O} de bordure de coupe de la lame supérieure défini, est après déplacée dans la section transversale du matériau pour sectionner le matériau.

3. Procédé selon la revendication 1 ou 2,
**caractérisé en ce que**
l'angle α_{U} de bordure de coupe de la lame inférieure est ajusté entre la bordure (44) de coupe de la lame inférieure et le plan de matériau M, et **en ce que** l'angle α_{O} de bordure de coupe de la lame supérieure est ajusté entre la bordure (39) de coupe de la lame supérieure et le plan de matériau, de telle manière que l'angle α_{U} de bordure de coupe de la lame inférieure et l'angle α_{O} de bordure de coupe de la lame supérieure sont choisis conformément à l'angle de bordure de coupe désiré (l'angle de bordure de coupe prescrit), sous lequel une bordure (45) de coupe étant constituée dans la section transversale du matériau s'étend vis-à-vis de l'axe central de la section transversale du matériau.

4. Procédé selon la revendication 3,
**caractérisé en ce que**
l'angle α_{U} de bordure de coupe de la lame inférieure et l'angle α_{O} de bordure de coupe de la lame supérieure sont ajustés de façon analogue.

5. Procédé selon la revendication 3 ou 4,
**caractérisé en ce que**
l'angle α_{U} de bordure de coupe de la lame inférieure et l'angle α_{O} de bordure de coupe de la lame supérieure sont ajustés conformément à un angle de bordure de coupe prescrit dans la section (43) transversale du matériau, l'angle prescrit étant constitué entre une bordure (45) de coupe et l'axe (42) central de la section transversale du matériau, la bordure de coupe reliant des bordures (48, 49) latérales de la section transversale du matériau à une distance sₘᵢₙ de bordure de coupe d'une bordure (51) supérieure et d'une bordure (50) inférieure de la section transversale du matériau.
